# EUROPÄISCHE PATENTSCHRIFT

(11) **EP 1 947 395 B1**
(45) Veröffentlichungstag und Bekanntmachung des Hinweises auf die Patenterteilung: **27.08.2014**
(21) Anmeldenummer: 07405356.2
(22) Anmeldetag: 17.12.2007
(51) Int. Cl.: F24D 17/00, F24D 19/10, F16K 31/02, G05D 23/19

(54) **Regelventil und damit aufgebaute Zirkulationsregelung für einen Warmwasserkreislauf**
Control valve and circulation control for a warm water circulation system
Soupape de régulation et régulation de circulation pour un circuit d'eau chaude

(30) Priorität: 22.01.2007 CH 842007
(43) Veröffentlichungstag der Anmeldung: 23.07.2008
(73) Patentinhaber: Georg Fischer JRG AG, 4450 Sissach (CH)
(72) Erfinder: Lüscher, Marcel, 5600 Ammerswil (CH)
(74) Vertreter: Fenner, Seraina

(56) Entgegenhaltungen:
- WO-A1-00/06931
- DE-A1- 2 539 371
- DE-U1- 8 332 412
- DE-U1- 29 805 921

## Beschreibung

### Anwendungsgebiet der Erfindung

Die Erfindung betrifft ein Regelventil und eine damit aufgebaute Zirkulationsregelung für einen Warmwasserkreislauf in Gebäuden, die von Personen genutzt werden und daher die Bereitstellung von Warmwasser in Trinkwasserqualität erfordern. In solchen Gebäuden, wie grössere Wohnhäuser, Hotels, Verwaltungsgebäuden, Büros, Spitäler oder Seniorenheimen ist die sofortige Verfügbarkeit von Warmwasser in gleich bleibender Temperatur, von z.B. 57°C, heutiger Standard. Um dies zu erreichen lässt man Warmwasser im Kreislauf geregelt zirkulieren, wobei damit neben dem Komfort zugleich der Wasserverbrauch reduziert werden soll. Bei der Bereitstellung von Warmwasser in derartigen Kreisläufen hat die Gewährleistung der Trinkwasserqualität höchste Priorität. Zur Vernichtung von Legionellen und anderen eingebrachten oder entstehenden biologischen, insbesondere mikrobiologischen Verunreinigungen, wird daher in Warmwasserkreisläufen die thermische Desinfektion angewandt. Hierzu spült man den Kreislauf periodisch mit aufgeheiztem Wasser erhöhter Temperatur, z.B. von 80°C. Die vorliegende Erfindung hat ein Regelventil und eine damit aufgebaute Zirkulationsregelung zum Gegenstand, beispielsweise zum Einbau in die Zirkulationsregelung für einen Warmwasserkreislauf und zur Durchführung des zugehörigen Verfahrens gemäss der EP 1 681 515 A1, wobei der Warmwasserkreislauf auch eine grosse Zahl von Strängen unterschiedlicher Länge aufweisen kann und eine oder mehrere Sollwert-Temperaturen zu regeln sind.

### Stand der Technik

Für die Zirkulationsregelung auf dem oben definierten Gebiet wurden verschiedene Vorrichtungen mit Einsatz eines thermostatischen Steuerelements oder eines Strangregulierventils vorgeschlagen. Ein derartiger thermostatischer Zirkulationsregler wird seit rund 12 Jahren erfolgreich von der Anmelderin vertrieben und ist z.B. in der Firmenschrift: "JRG Armaturen - Thermostatische Zirkulationsregler JRGUTHERM^{®} - mit absperrbaren Verschraubungen", Druckzeichen 11.01.3 G-P, der JRG Gunzenhauser AG, CH-4450 Sissach/Schweiz, dargestellt. Nach der Montage und Einregulierung der Armatur wird diese zusammen mit den angeschlossenen Rohrleitungsenden zur Wärmedämmung mit einer Ummantelung verpackt. Das Versorgungsnetz hat üblicherweise folgenden wesentlichen Aufbau: Dem zur Bereitstellung von Warmwasser vorgesehenen Warmwassererzeuger wird über eine Speiseleitung Kaltwasser zugeführt. Vom Warmwassererzeuger erstreckt sich eine Vorlaufhauptleitung, die als Vorlaufstrang in die einzelnen Stränge abzweigt und sich dort zumeist in mehrere Strangabgänge aufteilt. Jeder Vorlaufstrang geht hinter dem letzten Strangabgang in einen Rücklaufstrang über, in dem jeweils z.B. ein thermostatischer Zirkulationsregler sitzt. Hinter allen Zirkulationsreglern sammeln sich alle Rücklaufstränge in einer Rücklaufhauptleitung, welche über ein erstes Absperrventil, eine Pumpe und ein zweites Absperrventil im Warmwassererzeuger endet. Für die Konstanthaltung einer fest eingestellten Temperatur, die man im Dauerbetrieb beibehält, erfüllt der thermostatische Zirkulationsregler seinen Zweck im Prinzip. Will man jedoch eine thermische Desinfektion mit erhöhter Temperatur durchführen, ist eine temporäre manuelle Verstellung aller Regulierventile erforderlich und nach der Desinfektionsphase wiederum die Rückstellung. Der Zirkulationsregler besitzt ein Thermostat mit einem Dehnstoffelement, das bei aus dem strömenden Medium erhaltener Erwärmung die Hauptdichtung auf den Ventilsitz im Ventilkörper schiebt und damit den Durchfluss stoppt. Die wärmedämmende Ummantelung des Zirkulationsreglers wirkt sich nachteilig auf dessen Reaktionsgeschwindigkeit mit entsprechendem Funktionsfehler.

Weitere Zirkulationsregler für das genannte Einsatzgebiet werden im Patentschrifttum offenbart, z.B. DE 298 05 921 U1, DE 298 23 960 U1, DE 198 34 151 C1, DE 199 32 795 B4, DE 100 56 715 C2 und DE 102 26 289 C1. bzw. sind aus Firmenschriften bekannt, z.B. Danfoss GmbH, D-63073 Offenbach, "Modulares thermostatisches Zirkulationsventil MTCV, Druck-Nr.: VD.57.Y4.03, 04/2004; F.W. Oventrop GmbH & Co. KG, D-59939 Olsberg, "Aquastrom T plus", Thermostatisches Regelventil für Zirkulationsleitungen, Druck-Nr.: ti 130-0/20/MW, Ausgabe 2004; Gebr. Kemper GmbH, D-57462 Olpe, "Technische Information Kemper - Multi-Therm, automatisches Zirkulations-Regulierventil", Stand 01/06. Dokument DE 8 332 412 U1 zeigt die Merkmale des Oberbegriffs von Anspruch 1.

### Aufgabe der Erfindung

Mit der Zielstellung, den gegenwärtigen Stand der Technik weiter zu entwickeln, liegt der Erfindung die Aufgabe zugrunde, ein thermostatisches Regelventil vorzuschlagen, bei dem die Verzögerungszeit bei Temperaturänderung im Strömungsmedium, insbesondere bei Temperaturabfall unter den Sollwertbereich, minimiert wird. Ferner sind Fehlereinflüsse auf die Funktion weiter zu reduzieren. Hierbei sind die Vorschriften über die Wärmedämmung weiterhin einzuhalten.

Eine weitere Aufgabe besteht darin, mit dem zu schaffenden Regelventil eine Zirkulationsregelung für einen Warmwasserkreislauf aufzubauen, der zumindest in zwei Temperaturbereichen, nämlich im Normalmodus, mit z.B. 57°C, sowie im Desinfektionsmodus, mit z.B. von 80°C, betrieben werden kann. Schliesslich soll sich das Regelventil durch möglichst geringen Wartungsbedarf, lange Lebensdauer mit stabiler Funktion, praktische Handhabung bei der Montage und effiziente Herstellung in Serie auszeichnen.

### Übersicht über die Erfindung

Das zur Zirkulationsregelung für einen Warmwasserkreislauf bestimmte Regelventil weist zunächst einen Ventilkörper auf, der einen ersten Stutzen zum Anschluss eines ersten wasserführenden Rohrs und einen zweiten Stutzen zum Anschluss eines zweiten wasserführenden Rohrs besitzt. Der Ventilkörper hat ferner einen Ventilstutzen zur Aufnahme eines Einsatzes, in dem eine Stösseleinheit axial beweglich geführt ist. Am inneren Übergang zwischen den beiden Stutzen befindet sich ein Strömungsdurchgang als Ventilsitz, auf den eine zur Stösseleinheit gehörende Hauptdichtung querschnittsverändernd wirkt. Das Regelventil umfasst ein Stellglied mit einer Antriebseinheit zum Verstellen der Stösseleinheit. Die Stösseleinheit ist mit einem Sensor versehen, der ein Fühlerelement zur Erfassung der auf das Fühlerelement einwirkenden Temperatur hat. Der vom Fühlerelement erfasste Temperatur-Istwert ist bei Abweichung von einen Temperatur-Sollwert zur Umschaltung der Antriebseinheit nutzbar.

Nachfolgend werden spezielle Ausführungsformen des erfindungsgemässen Regelventils definiert: Es sind Mittel zur Erzielung einer homogenen Umspülung des das Fühlerelement aufnehmenden Bereichs des Sensors mit Wasser, das den Ventilkörper durchströmt, vorgesehen. Das Fühlerelement ist im Spitzenbereich der Stösseleinheit, nahe der Hauptdichtung, angeordnet. Die Mittel zur Umspülung umfassen Strömungsspalte, welche auch bei an sich von der Hauptdichtung völlig verschlossenem Ventilsitz einen minimalen Wasserdurchfluss zulassen.

Zur Wärmedämmung ist eine das Regelventil ummantelnde Isolation vorgesehen. Die Antriebseinheit basiert auf thermischer Stoffausdehnung, hat ein Heizelement und ist zur beschleunigten Abkühlung bei deaktiviertem Heizelement ausserhalb der Isolation angeordnet. Die Aktivierung des Heizelements erfolgt im Ergebnis eines Vergleichs zwischen dem vom Fühlerelement erfassten Temperatur-Istwert und einem einstellbaren Temperatur-Sollwert.

Die Hauptdichtung hat im Prinzip die Gestalt eines Kegels mit einem inneren Hohlraum und einer Kegelspitze zum Verschliessen des Strömungsdurchgangs am Ventilsitz. Der das Fühlerelement aufnehmende Bereich des Sensors steckt im Hohlraum der Hauptdichtung. Die Mittel zur Umspülung in der Hauptdichtung umfassen ausserhalb der Kegelspitze angeordnete Durchbrüche. Der Strömungsdurchgang am Ventilsitz ist von einem Durchgang durch eine Sitzscheibe gebildet. Die Sitzscheibe liegt mit ihrer Unterseite auf einer am Übergang zwischen den beiden Stutzen vorhandenen Ringschulter auf. Die Strömungsspalte sind sich vom Durchgang, auf der Oberseite der Sitzscheibe erstreckende Keilkonturen.

Die Stösseleinheit umfasst eine Feder und eine Hülsenkombination, in welcher der Sensor steckt. Die Feder stützt sich einerseits am Ventilkörper und anderseits an der Stösseleinheit ab und generiert eine Kraft, um die Hauptdichtung vom Ventilsitz zu entfernen und somit das Regelventil in die Offenstellung zu bewegen.

Die Hülsenkombination ist patronenförmig und umfasst ein Hülsenoberteil sowie ein damit zusammensetzbares Hülsenunterteil. Das Hülsenoberteil weist auf:
a) eine Kopfzone und eine Fusszone, durch die sich ein axialer Durchgang erstreckt;
b) ein erstes Innengewinde an der Mündung des Durchgangs an der Kopfzone, das zur Aufnahme einer zur Stösseleinheit gehörenden Justierschraube dient;
c) einen in der Kopfzone gelegenen seitlichen Auslass, der zum Durchtritt einer vom Sensor abgehenden Messleitung bestimmt ist; und
d) ein Verbindungsmittel, vorzugsweise in Gestalt eines zweiten Innengewindes, an der Fusszone zum Zusammensetzen mit dem Hülsenunterteil.
Das Hülsenunterteil weist auf:
a) einen axialen Durchgang;
b) ein Verbindungsmittel, vorzugsweise in Gestalt eines Aussengewindes, zum Zusammensetzen mit dem Hülsenoberteil;
c) einen Hülsenflansch, der das übrige Hülsenunterteil im Aussenmass überragt; und
d) einen Kragen, der im Aussenmass gegenüber dem Hülsenflansch verkleinert ist.
Der Kragen ragt in den Hohlraum der Hauptdichtung und dabei steht ein Flansch der Hauptdichtung am Flansch des Hülsenunterteils an.

Die Feder umgibt die Hauptdichtung und stützt sich dabei unter deren Flansch ab. Die Mittel zur Umspülung des das Fühlerelement aufnehmenden Bereichs des Sensors mit Wasser umfassen, am Hülsenunterteil, über dessen Flansch angeordnete Durchbrüche. Zwischen die Hülsenkombination sind, nach aussen zum Einsatz und nach innen zum Sensor, Dichtungen eingefügt. Der Einsatz hat eine ausserhalb des Ventilstutzens liegende Öffnung zum Durchtritt der vom Sensor kommenden Messleitung. Ein Adapter ist zum lösbaren Verbinden des Stellglieds mit dem Einsatz vorhanden.

Nachfolgend wird das Prinzip einer Zirkulationsregelung für einen Warmwasserkreislauf mit dem obigen erfindungsgemässen Regelventil definiert: Vom Sensor des Regelventils erstreckt sich eine Messleitung oder eine Funkverbindung zur Übermittlung des vom Fühlerelement erfassten Temperatur-Istwerts an einen Regler. Der Regler besitzt ein Modul mit einem eingespeicherten Temperatur-Sollwert. Vom Regler erstreckt sich eine Stellleitung oder eine Funkverbindung zur Übermittlung einer Signalisation an das Stellglied, wobei die Signalisation im Regler durch Vergleich zwischen Temperatur-Istwert und Temperatur-Sollwert entsteht.

Schliesslich werden spezielle Ausführungsformen der mit dem erfindungsgemässen Regelventil aufgebauten Zirkulationsregelung für einen Warmwasserkreislauf definiert: Die Aktivierung des Stellglieds besteht in einer Stromzufuhr an dessen Heizelement zur Generierung der thermischen Stoffausdehnung in der Antriebseinheit.

Der Regler ist mit einem daran vorhandenen Befehlsorgan ausgestattet und/oder mit einem externen Geber verbunden, über welche sich ein oder mehrere Temperatur-Sollwerte und zugehörige Betriebszeiten im Regler einspeichern lassen. Der Regler ist mit einem daran vorhandenen Display ausgestattet und/oder mit einer externen Anzeige verbunden, woran z.B. der Temperatur-Istwert, der eingestellte Temperatur-Sollwert, der gewählte Betriebsmodus der Zirkulationsregelung, der Zustand des Regelventils und Störungsmeldungen ablesbar sind.

### Kurzbeschreibung der beigefügten Zeichnungen

Es zeigen:

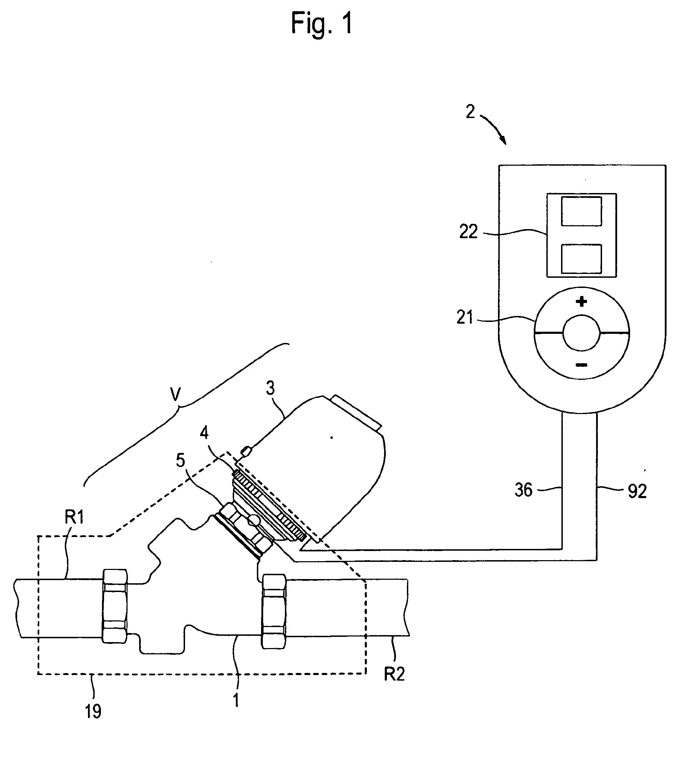

- Figur 1 -: eine Einrichtung zur Zirkulationsregelung, als prinzipieller Gesamtaufbau;

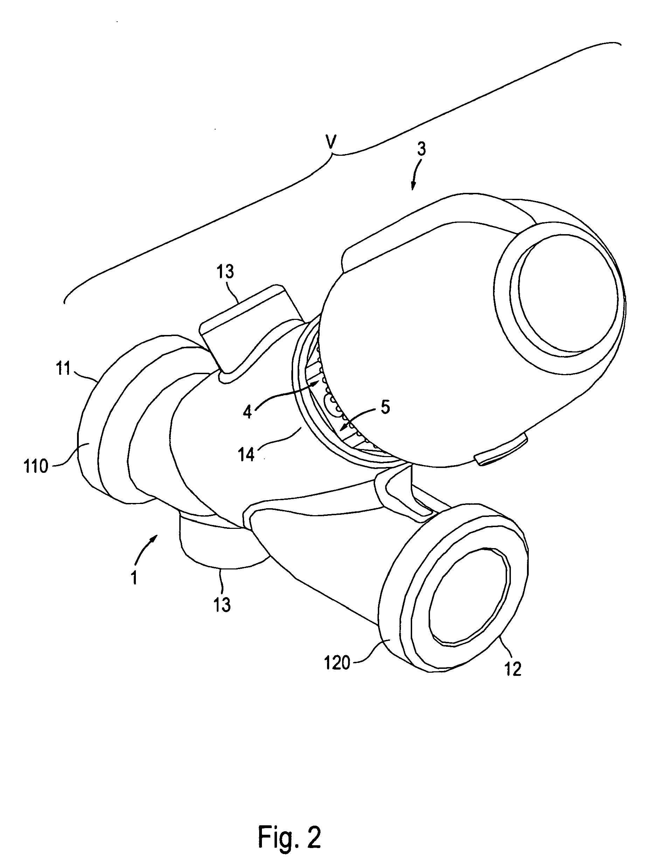

- Figur 2 -: ein Regelventil aus Figur 1, mit Ventilkörper, Stellglied, Verbindungsring und Adapter, in Perspektivdarstellung;

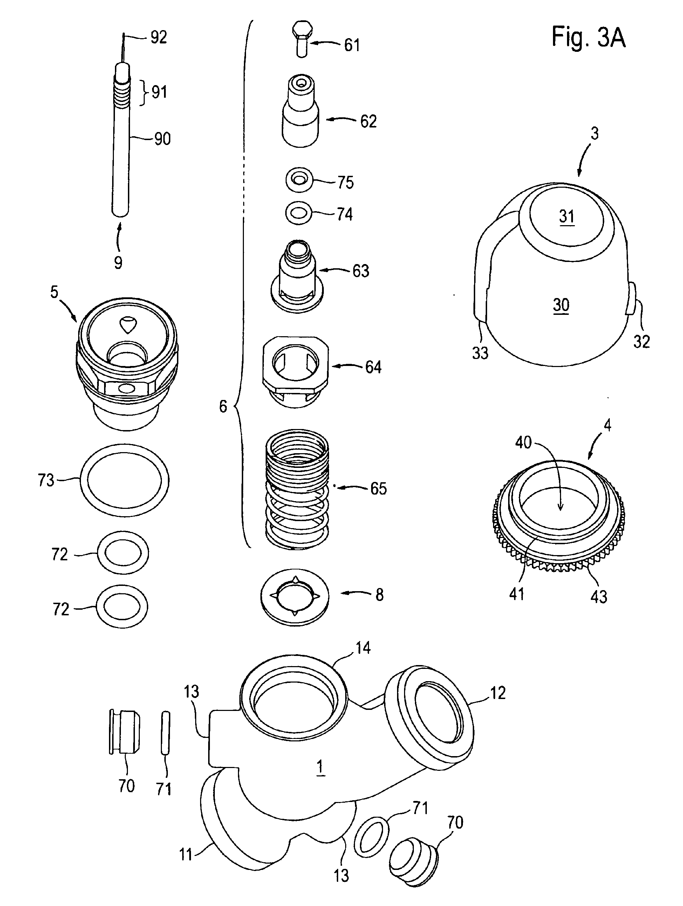

- Figur 3A -: das Regelventil gemäss Figur 2, in perspektivischer Explosivdarstellung;

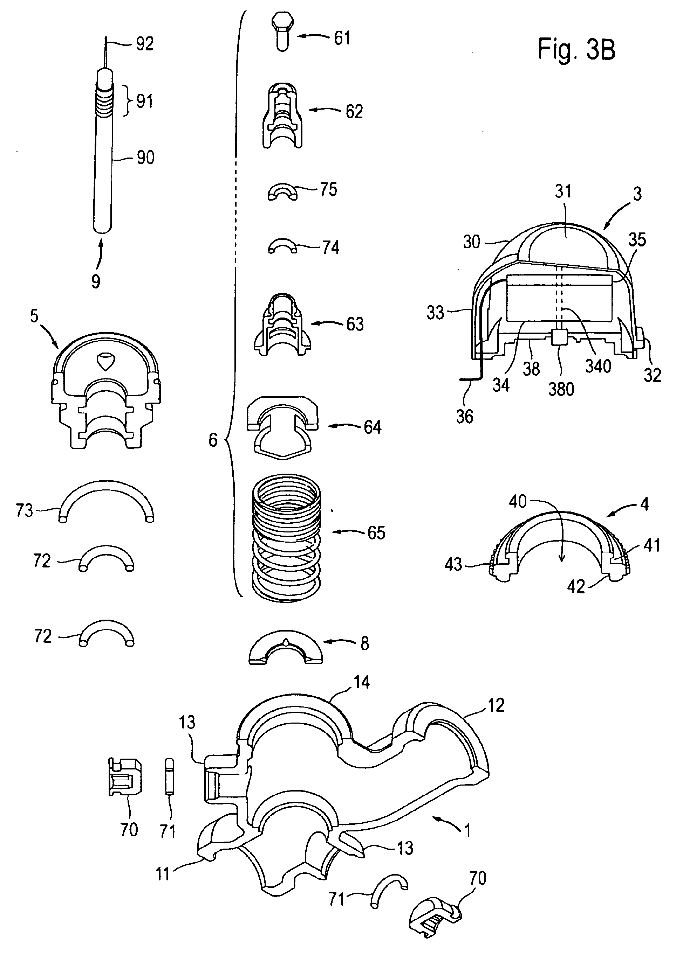

- Figur 3B -: die Darstellung gemäss Figur 3A, im Teilschnitt;

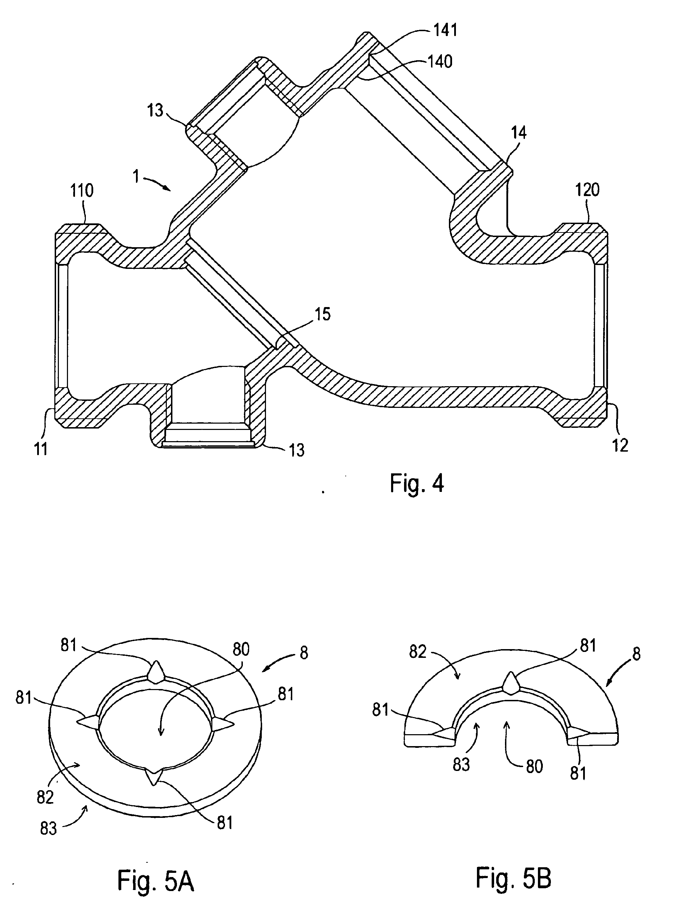

- Figur 4 -: den Ventilkörper aus Figur 3A, in vergrösserter Schnittdarstellung;
- Figur 5A -: die Sitzscheibe aus Figur 3A, in vergrösserter Perspektivdarstellung;
- Figur 5B -: die Sitzscheibe gemäss Figur 5A, in Schnittdarstellung;

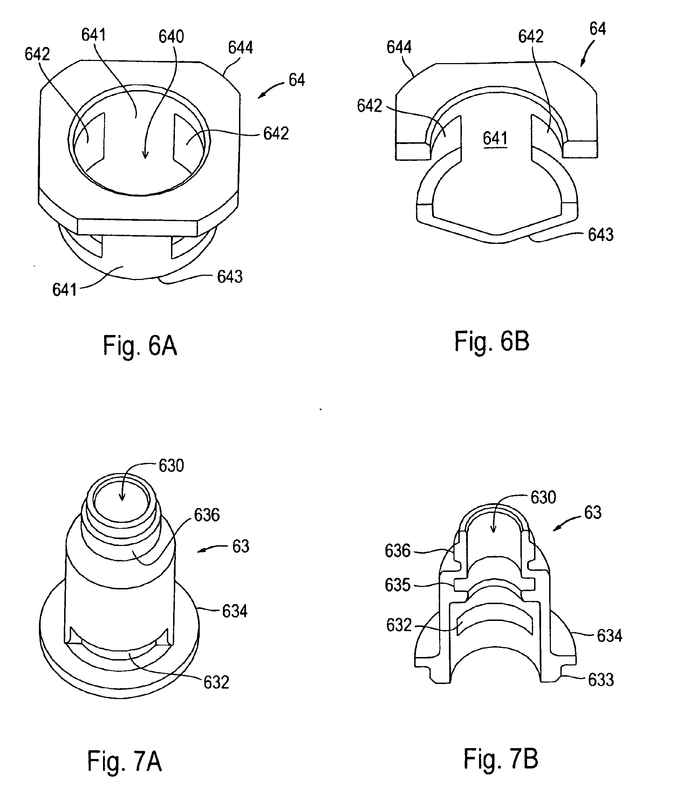

- Figur 6A -: die Hauptdichtung aus Figur 3A, in vergrösserter Perspektivdarstellung;
- Figur 6B -: die Hauptdichtung aus Figur 6A, in Schnittdarstellung;
- Figur 7A -: das Hülsenunterteil der Stösseleinheit aus Figur 3A, in vergrösserter Perspektivdarstellung;
- Figur 7B -: das Hülsenunterteil aus Figur 7A, in Schnittdarstellung;

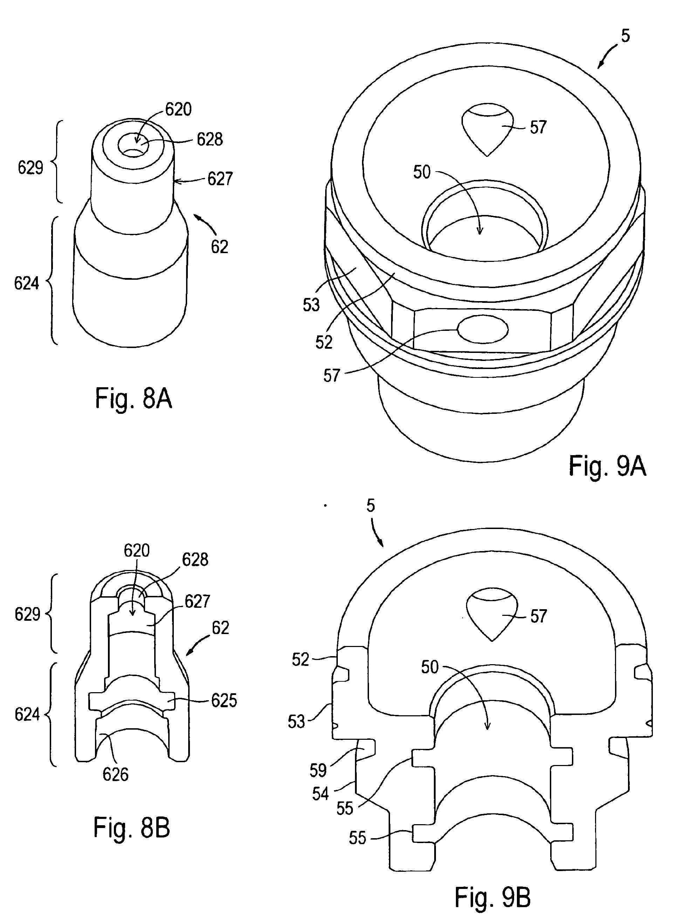

- Figur 8A -: das Hülsenoberteil der Stösseleinheit aus Figur 3A, in vergrösserter Perspektivdarstellung;
- Figur 8B -: das Hülsenoberteil aus Figur 8A, in Schnittdarstellung;
- Figur 9A -: den Einsatz aus Figur 3A, in vergrösserter Perspektivdarstellung;
- Figur 9B -: den Einsatz aus Figur 9A, in Schnittdarstellung;

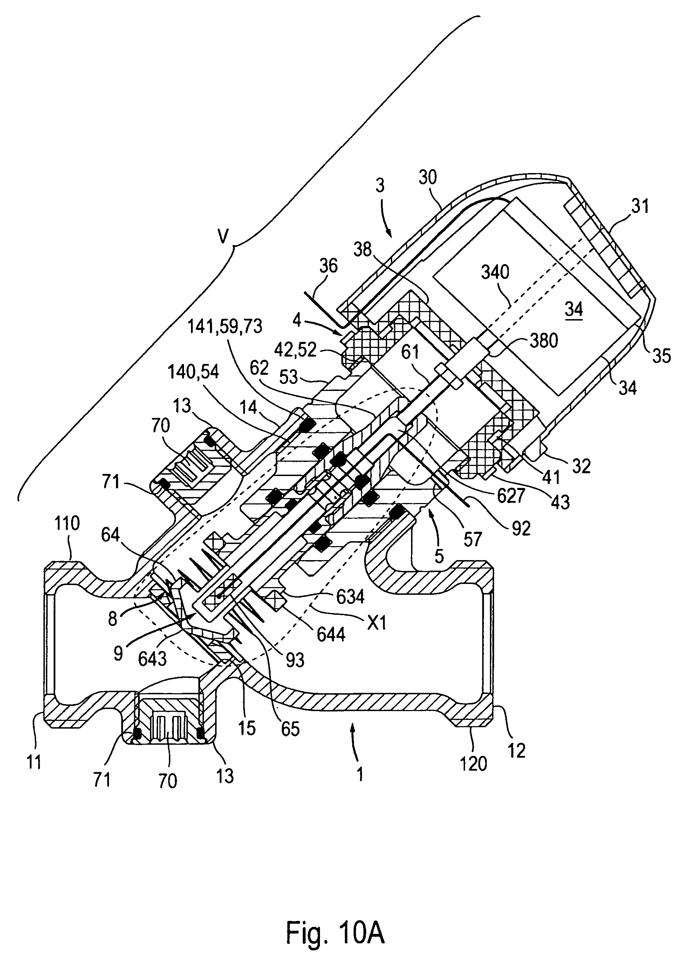

- Figur 10A -: das Regelventil gemäss Figur 2, geschlossen, in Schnittdarstellung; ,

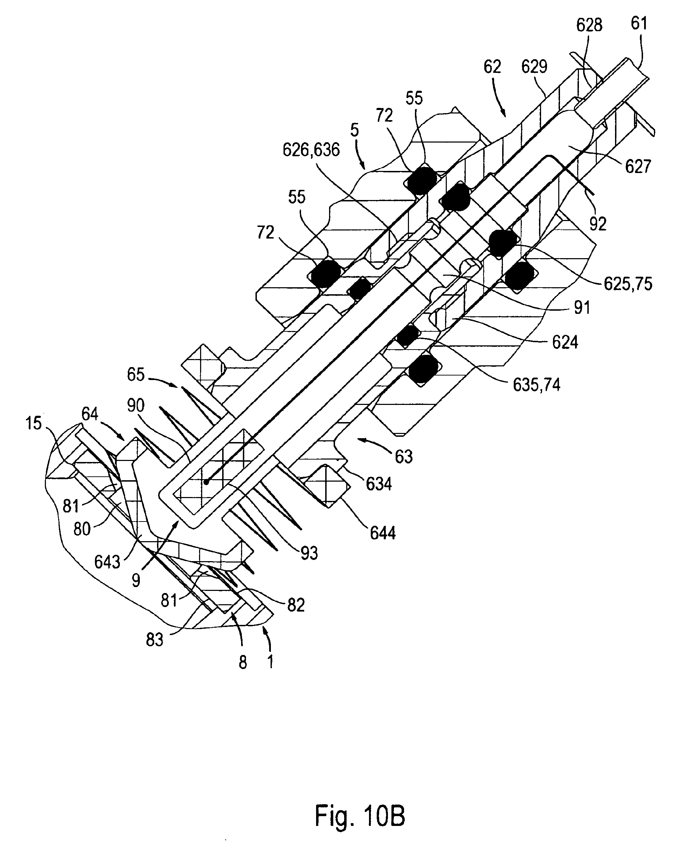

- Figur 10B -: das vergrösserte Detail X1 aus Figur 10A;

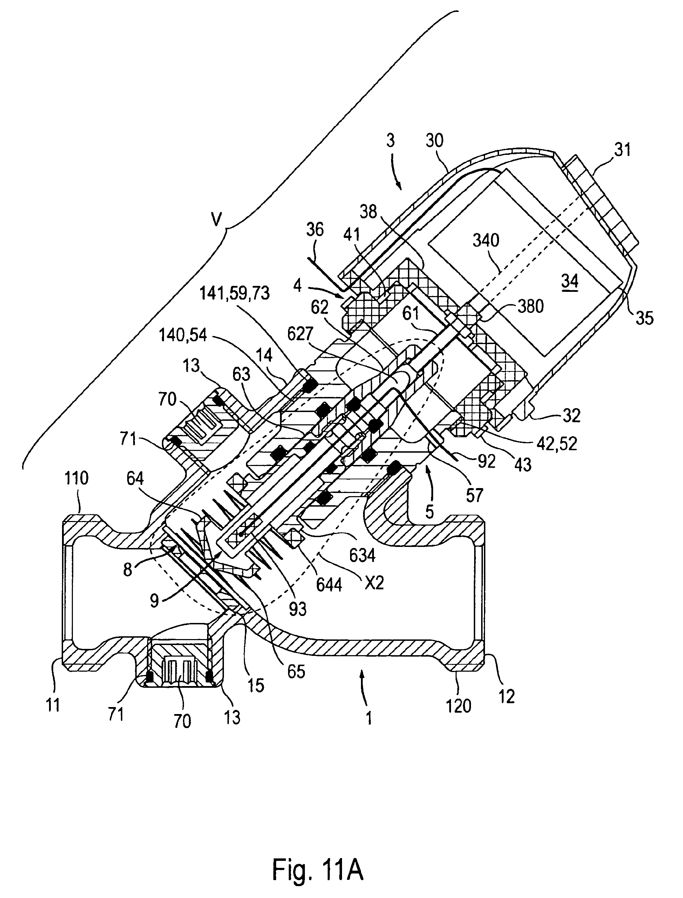

- Figur 11A -: das Regelventil gemäss Figur 2, offen, in Schnittdarstellung; und

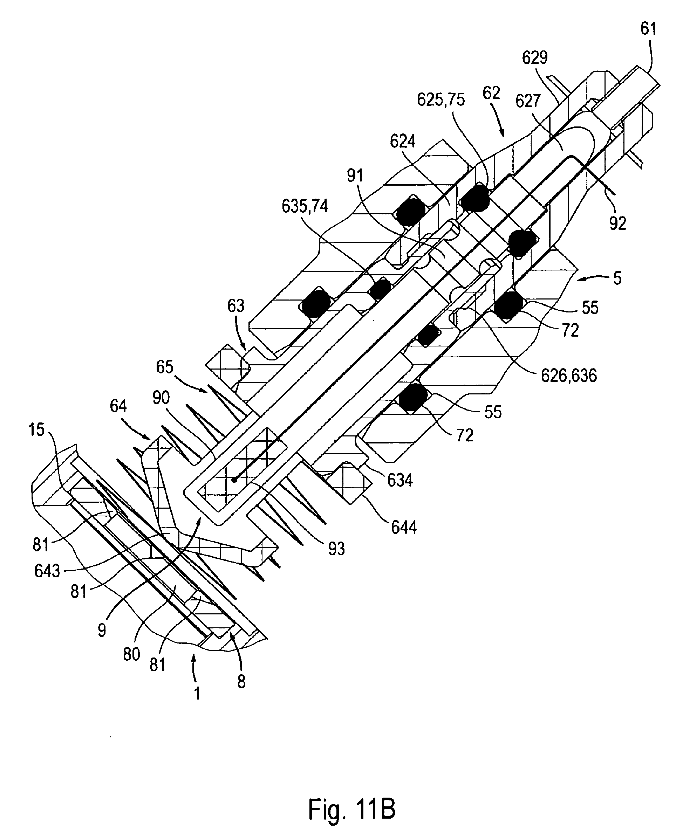

- Figur 11B -: das vergrösserte Detail X2 aus Figur 11A.

### Ausführungsbeispiele

Mit Bezug auf die beiliegenden Zeichnungen erfolgt nachstehend die detaillierte Beschreibung eines Ausführungsbeispiels zum erfindungsgemässen Regelventil und einer damit aufgebauten Zirkulationsregelung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1

Die Einrichtung zur Zirkulationsregelung besteht im Prinzip aus einem Regelventil **V** und dem Regler **2,** die miteinander durch die Stellleitung **36** und die Messleitung **92** verbunden sind. Das Regelventil **V** setzt sich zunächst aus dem Ventilkörper **1,** dem Stellglied **3,** dem Adapter **4** und dem Einsatz **5** zusammen. Das Stellglied **3** sowie der Adapter **4** sind an sich bekannt. An den Ventilkörper 1 sind ein erstes Rohr **R1** und ein zweites Rohr **R2** mit der Funktion als Zu- bzw. Ableitung angeschlossen. In den Ventilkörper **1** ist der Einsatz **5** eingeschraubt und mittels eines daran anmontierten Adapters **4** ergibt sich die Verbindung zum Stellglied **3.** Zur Vermeidung von Wärmeverlusten und Geräuschdämpfung sind der Ventilkörper **1** mit den daran angeschlossenen Enden der Rohre **R1,R2** sowie der aus dem Ventilkörper **1** herausragende Einsatz **5** von einer Isolation **19** ummantelt. Zur sicheren Funktion der Isolation **19** kann sich diese bis über den Adapter **4** erstrecken. Die Stellleitung **36** tritt aus dem Stellglied **3** aus und erstreckt sich zum Regler **2,** während die vom Regler **2** kommende Messleitung **92** durch den Einsatz **5** in das Innere des Regelventils **V** verläuft. Am Regler **2** ist der Sollwert für die Temperatur des im Ventilkörper **1** anstehenden Wassers an einem Befehlsorgan **21** einstellbar. In einer komplettierten Version sind am Regler **2** der eingestellte Sollwert, die im Ventilkörper **1** gemessene Wassertemperatur, die momentane Stellung des Regelventils **V** und das momentan an das Stellglied **3** übermittelte Signal an einem Display **22** ablesbar.

### Figur 2

Der innerlich hohle Ventilkörper **1** hat zum Anschluss der Rohre **R1,R2** einen Einlassstutzen **11** und einen Auslassstutzen **12,** die zueinander diametral gegenüberliegen. Zwischen den Stutzen **11,12** geht im Winkel ein Ventilstutzen **14** ab, der zur Aufnahme des Einsatzes **5** bestimmt ist. Für spezielle Zwecke kann der Ventilkörper **1** mit Zusatzstutzen **13** versehen sein, die bei Nichtgebrauch verschlossen sind. Äusserlich sichtbar sind der aus dem Ventilstutzen **14** herausragende Einsatz **5** sowie den letzteren mit dem Stellglied **3** verbindende Adapter **4.**

### Figuren 3A und 3B

Dieses Figurenpaar zeigt die wesentlichen Bestandteile des Regelventils **V.** Der vorzugsweise metallische Ventilkörper **1** hat einen Einlassstutzen **11,** einen Auslassstutzen **12** und optionale Zusatzstutzen **13,** wobei letztere bei Nichtgebrauch jeweils mit einem Blindstopfen **70** und einer ersten Dichtung **71** verschlossen sind.

Ein an sich bekanntes Stellglied **3** wird von einem kappenförmigen Gehäuse **30** überdeckt, von dem einerseits ein wulstartiger Kabelsteg **33** und andererseits ein Betätigungsknopf **32** hervorstehen. Unter dem Kabelsteg **33** wird die Stellleitung **36** vom im Inneren des Stellglieds **3** gelegenen Heizelement **35** nach aussen geführt. Das Heizelement **35** sitzt auf einer auf Wärmeausdehnung beruhenden Antriebseinheit **34,** typischerweise ein herkömmliches Wachselement. Von der Antriebseinheit **34** erstreckt sich ein Vorschuborgan **340,** welches einerseits auf einen Stössel **380** wirkt, der zentrisch in einer im Gehäuse **30** eingesetzten Basis **38** angeordnet ist. Andererseits ist das Vorschuborgan **340** mit einem knopfförmigen Anzeigeelement **31** verbunden, das aus dem Kopf des Gehäuses **30** ragt und an dessen aus- oder eingefahrenem Zustand die Stellung des Regelventils **V** optisch signalisiert wird.

Ein ringförmiger Adapter **4** hat den zylindrischen Durchgang **40,** eine nach aussen gewandte Radialnut **41** und die zur Verbesserung der Griffigkeit äusserliche Profilierung **43.** Ferner ist der Adapter **4** mit einem Innengewinde **42** versehen. Schliesslich gehört zum Regelventil **V** der Einsatz **5.**

Die Stösseleinheit **6** umfasst eine Justierschraube **61,** die zum Eindrehen in den Kopf des Hülsenoberteils **62** vorgesehen ist, welches sich mit dem Hülsenunterteil **63** verbinden lässt. Weiter hat die Stösseleinheit **6** die kappenartige Hauptdichtung **64** und die Schraubenfeder **65.** Die beiden Hülsenteile **62,63** bilden einen Mantel für den darin aufzunehmenden, an sich bekannten Sensor **9,** der den Schaft **90** mit der Halszone **91** besitzt, oberhalb der die Messleitung **92** austritt. Die Halszone **91** besitzt mehrere zirkuläre Einschnürungen, die bei der Herstellung des Sensors **9** durch Verpressen zur Fixierung der herausragenden Messleitung **92** entstanden sind. Schliesslich gehören zum Regelventil **V** zweite Dichtungen **72,** eine dritte Dichtung **73,** eine vierte Dichtung **74** und die fünfte Dichtung **75** sowie die Sitzscheibe **8.**

### Figur 4

Zum Verschrauben der Rohre **R1, R2** am Ventilkörper **1** sind der Einlassstutzen **11** und der Auslassstutzen **12** jeweils mit einem Aussengewinde **110,120** versehen. Der Ventilstutzen **14** hat ein Innengewinde **140** und an seiner Mündung eine innere Radialnut **141.** Im Inneren des Ventilkörpers **1,** am Übergang vom Einlassstutzen **11** zum Auslassstutzen **12,** befindet sich eine Ringschulter **15.**

### Figuren 5A und 5B

Zentrisch in der vorzugsweise metallischen Sitzscheibe **8** befindet sich ein kreisrunder Durchgang **80,** von dem sich Strömungsspalte **81** erstrecken, die auf der der Ringschulter **15** abgewandten Oberseite **82** liegen. Die keilförmigen Strömungsspalte **81** besitzen am Rand zum Durchgang **80** hin ihre grösste Weite und laufen zur Oberseite **82** aus. Die Unterseite **83** der Sitzscheibe **8** hingegen ist glatt ausgebildet.

### Figuren 6A und 6B

Die kappenförmige Hauptdichtung **64** ist vorteilhaft als Kunststoffspritzteil hergestellt. Oben befindet sich ein Flansch **644** und am unteren Ende eine geschlossene Kegelspitze **643,** die miteinander durch senkrechte, gekrümmte Stege **641** verbunden sind. Zwischen den Stegen **641** liegen Durchbrüche **642,** so dass der von der Hauptdichtung **64** umschlossene Hohlraum **640** an den Stellen der Durchbrüche **642** offen ist.

### Figuren 7A bis 8B

Durch das Hülsenunterteil **63** erstreckt sich der Durchgang **630,** wobei in der Kopfzone ein Aussengewinde **636** vorhanden ist und die gegenüber liegende Fusszone einen im Aussendurchmesser erweiterten Hülsenflansch **634** hat. Oberhalb des Hülsenflansches **634** sind schlitzartige Durchbrüche **632** vorgesehen und unterhalb des Hülsenflansches **634** endet das Hülsenunterteil **63** mit einem Kragen **633.** Zwischen den Durchbrüchen **632** und dem Aussengewinde **636** hat das Hülsenunterteil **63** eine innere Radialnut **635.**

Durch das Hülsenoberteil **62** erstreckt sich der Durchgang **620.** Am freien Ende der Kopfzone **629** befindet sich ein erstes Innengewinde **628** und die gegenüber liegende Fusszone **624** endet mit einem zweiten Innengewinde **626.** Oberhalb des zweiten Innengewindes **626** liegt eine Radialnut **625.** Über die Kopfzone **629,** welche gegenüber der Fusszone **624** im Aussendurchmesser verringert ist, erstreckt sich ein grossflächiger Auslass **627.**

### Figuren 9A und 9B

Durch den Einsatz **5** verläuft axial der zylindrische Durchgang **50,** der sich in der Kopfzone erweitert, an welcher sich ein erstes Aussengwinde **52** befindet. Unterhalb des ersten Aussengewindes **52** schliesst sich ein Aussenvielkant **53** an, dem eine äussere Radialnut **59** folgt, unterhalb der das zweite Aussengwinde **54** liegt. Die Kopfzone hat zwei zueinander gegenüberliegende Öffnungen **57.** In der Fusszone erstrecken sich vom Durchgang **50** zwei zueinander parallel beabstandete innere Radialnuten **55.**

### Figuren 10A und 10B

Die Sitzscheibe **8** liegt mit ihrer Unterseite **83** im Inneren des Ventilkörpers **1** auf der Ringschulter **15** auf. Bei geschlossenem Regelventil **V** ragt die Kegelspitze **643** der kappenförmigen Hauptdichtung **64** maximal in den Durchgang **80** hinein, so dass nur ein minimaler Wasserfluss über die Strömungsspalte **81** geschieht. Dieser Minimalfluss dient der ununterbrochenen und somit weitestgehend fehlerfreien Temperaturmessung des im Ventilkörper **1** zur Einspeisung in den Hauswasserkreislauf bereitstehenden Warmwassers. Die Hauptdichtung **64** ist von der Schraubenfeder **65** umgeben, die sich einerseits auf der Oberseite **82** der Sitzscheibe **8** und andererseits unterhalb des Flansches **644** der Hauptdichtung **64** abstützt. Die Kraft der Schraubenfeder **65** strebt einen Rückstoss der Hauptdichtung **64** und damit ein Öffnen des Regelventils **V** gegen die Wirkung des Stellglieds **3** an.

Der Kragen **633** des Hülsenunterteils **63** ragt in den Hohlraum **40** der Hauptdichtung **64** hinein, wobei der Hülsenflansch **634** auf dem Flansch **644** der Hauptdichtung **64** aufsitzt. Das Aussengewinde **636** des Hülsenunterteils **63** ist in das zweite Innengewinde **626** des Hülsenoberteils **62** eingeschraubt, so dass beide Hülsenteile **62,63** einen patronenförmigen Hohlkörper bilden, in welchen der Sensor **9** eingesetzt ist. Das untere freie Ende des Schafts **90** des Sensors **9,** in dem sich das Fühlerelement **93** zur Temperaturerfassung befindet, steht aus dem Durchgang **630** hervor und ragt in den Hohlraum **640** der Hautdichtung **64** hinein. Vom Fühlerelement **93** erstreckt sich die Messleitung **92,** welche zunächst durch den Auslass **627** des Hülsenoberteils **62** und dann durch eine Öffnung **57** im Einsatz **5** nach aussen bis an den Regler **2** geführt wird. Zur Abdichtung gegenüber dem an den Sensor **9** anströmenden Wasser und zur Fixierung des Sensors **9** innerhalb der Hülsenkombination **62,63** ist in die Radialnut **635** im Hülsenunterteil **63** eine vierte Dichtung **74** eingesetzt, welche den Schaft **90** des Sensors **9** unterhalb seiner Halszone **91** umfasst. Zum gleichen Zweck liegt in der Radialnut **625** im Hülsenoberteil **62** die fünfte Dichtung **75,** welche in eine der zirkulären Einschnürungen in der Halszone **91** des Sensors **9** eingreift.

Der Einsatz **5** ist mit seinem zweiten Aussengewinde **54** in das Innengewinde **140** im Ventilstutzen **14** des Ventilkörpers **1** eingeschraubt. Zum Ansetzen eines Schraubwerkzeugs ist der Aussenvielkant **53** am Einsatz **5** nutzbar. Zur Abdichtung zwischen dem Einsatz **5** und dem Ventilstutzen **14** ist in dessen Radialnut **141** die dritte Dichtung **73** eingelegt, welche andererseits in der äusseren Radialnut **59** des Einsatzes **5** eingebettet ist. Die Hülsenkombination **62,63** mit dem axial darin aufgenommenen Sensor **9** durchragt den Durchgang **50** im Einsatz **5** axial, wobei die Kopfzone **629** des Hülsenoberteils **62** in den oben erweiterten Durchgang **50** ragt. Zur Abdichtung der sich bei Stellungsänderung im Regelventil **V** axial bewegenden Hülsenkombination **62,63** gegenüber dem Einsatz **5,** liegt in den beiden inneren Radialnuten **55** jeweils eine zweite Dichtung **72,** die das Hülsenoberteil **62** bzw. das Hülsenunterteil **63** äusserlich radial umgreift.

In das erste Innengewinde **628** am Hülsenoberteil **62** greift der Gewindeschaft der Justierschraube **61** ein. Je nach Eingriffstiefe der Justierschraube **61** wird die Position der Stösseleinheit **6** justiert. Auf das erste Aussengewinde **52** am Einsatz **5** ist das Innengewinde **42** des Adapters 4 aufgeschraubt und innere Rastorgane (nicht gezeigt) der Basis **38** des Stellglieds **3** greifen in die Radialnut **41** am Adapter **4** ein, so dass das komplette Stellglied **3** lösbar an den Adapter **4** angedockt ist. Durch Niederdrücken des Betätigungsknopfs **32** lassen sich die inneren Rastorgane aus der Radialnut **41** ausklinken, so dass das Stellglied **3** vom Adapter **4** entfernt werden kann. Auf den Kopf der Justierschraube **61** trifft der Stössel **380,** welcher zentrisch und axial begrenzt beweglich in der Basis **38** angeordnet ist. Im Gehäuse **30** des Stellglieds **3** ist die Antriebseinheit **34** zur Aktivierung für das sich von der Antriebseinheit **34,** einerseits zum Stössel **380** und andererseits zum Anzeigeelement **31,** erstreckende Vorschuborgan **340** untergebracht. Auf der Antriebseinheit **34** sitzt das Heizelement **35,** an welches die vom Regler **2** kommende Stellleitung **36** herangeführt ist.

In der gezeigten geschlossenen Stellung des Regelventils V ist das Heizelement **35** aktiviert, so dass die Antriebseinheit **34** ebenfalls aktiviert ist und das ausgetriebene Vorschuborgan **340** den Stössel **380** verschiebt, welcher auf die Justierschraube **61** drückt. Damit wird die Stösseleinheit **6** tiefer in den Ventilkörper **1** geschoben und die Hauptdichtung **64** mit ihrer Kegelspitze **643** gegen den Druck der Schraubenfeder **65** auf die Sitzscheibe **8** gepresst. In diesem Zustand ist die Durchströmung des Ventilkörpers **1** zwischen dem Einlassstutzen **11** und dem Auslassstutzen **12** bis auf einen Minimalfluss gestoppt, der durch die Strömungsspalte **81** rinnt. Damit gelangt ein zur Temperaturmessung ausreichender Volumenstrom von Warmwasser durch die seitlichen Durchbrüche **642** in der Hauptdichtung **64** an den Sensor **9,** so dass das darin sitzende Fühlerelement **93** quasi direkt umspült wird und die Erfassung der Wassertemperatur weitgehend korrekt bei minimierter Systemverzögerung erfolgt. Bei geschlossener Stellung des Regelventils **V** hat man im Warmwasserkreislauf eine Temperatur im Sollwertbereich festgestellt, so dass momentan keine Öffnung des Regelventils **V** durch Abschalten des Heizelements **35** erforderlich ist. Das Vorschuborgan **340** hat das Anzeigelement **31** zum Gehäuse **30** hin bewegt und signalisiert damit optisch die geschlossene Stellung des Regelventils **V.**

### Figuren 11A und 11B

Ist die vom Fühlerelement **93** im Sensor **9** erfasste Temperatur - z.B. in einem Rücklaufstrang eines Wasserkreislaufs - unterhalb des Sollwertbereichs abgefallen, gelangt der Messwert über die Messleitung **92** zum Regler **2,** in welchem die überschrittene Temperaturdifferenz eine Abschaltung der Stellleitung **36** bewirkt. Damit werden das Heizelement **35** sowie die Antriebseinheit **34** inaktiv und das Vorschuborgan **340** axial vom Ventilkörper **1** weg bewegt, mit der Folge, dass die Schraubenfeder **65** die Stösseleinheit **6** mit der zuunterst angeordneten Hauptdichtung **64** von der Sitzscheibe **8** zurückschiebt. Hierbei fährt die Kegelspitze **643** aus dem Durchgang **80** der Sitzscheibe **8** heraus, so dass ein grosser Strömungsquerschnitt für das den Ventilkörper **1** durchfliessende Warmwasser entsteht. Die Hülsenkombination **62,63** hat sich axial im Durchgang **50** des Einsatzes **5** entlang der beiden feststehenden zweiten Dichtungen **72** verschoben, wodurch die mitbewegte Justierschraube **61** den Stössel **380** in Richtung der Antriebseinheit **34** drängt. Zugleich drückt das Vorschuborgan **340** das Anzeigeelement **31** aus dem Gehäuse **30** heraus und signalisiert damit optisch die Offenstellung des Regelventils **V.**

Bei offenem Regelventil **V** findet eine erhöhte Zirkulation im Warmwasserkreislauf statt, so dass der Sollwertbereich der festgelegten Wassertemperatur - z.B. 57°C im Normalbetrieb und 80°C im Desinfektionsbetrieb - alsbald erreicht wird. Vorzugsweise wird die Zirkulationsregelung im Zweipunktmodus, d.h. nur mit geschlossenem oder maximal geöffnetem Regelventil **V** betrieben, was für die meisten Anwendungen völlig ausreichend ist und überdies sich leichter beherrschen lässt.

Die sehr kurze Messstrecke zwischen dem auf Sollwerttemperatur zu haltendem Medium und dem Fühlerelement **93,** das im Spitzenbereich des Sensors **9** eingebaut ist und somit fast direkt vom Medium umspült wird, gewährleistet die Minimierung von Fehlereinflüssen und die Verkürzung der Reaktionszeit bei Temperaturänderung. Um den Ventilkörper **1** ist vorschriftsgemäss zur Reduzierung von Wärmeverlusten die Isolation **19** anzubringen, somit entstünde auch bei Unterschreiten des Temperatursollwerts - mit geschlossenem Regelventil **V -** ein die Temperaturmessung verfälschender Wärmestau. Die in der Sitzscheibe **8** vorhandenen Strömungsspalte **81,** welche einen Minimalfluss zulassen, bewirken einen Abbau des Wärmestaus und die unverzögerte Zuführung des die Momentantemperatur aufweisenden Mediums an das Fühlerelement **93.** Zur Qualität der Zirkulationsregelung tragen ferner die Positionierung der Antriebseinheit **34** mit dem Heizelement **35** ausserhalb der Isolation **19** sowie das Stellglied **3** und der Adapter **4** mit deren gegenüber dem Ventilkörper **1** und dem Einsatz **5** verminderter Wärmeleitfähigkeit bei. Der Umschaltvorgang vom geschlossenen Regelventil **V** in den geöffneten Zustand wird durch Desaktivieren des Heizelements **35** und damit beendeter Wärmezuführung in die Antriebseinheit **34** eingeleitet. Die in kurzer Zeit ermöglichte Auskühlung der Antriebseinheit **34** gewährleistet eine verzögerungsarme Öffnung des Regelventils **V.**

## Patentansprüche

1. Regelventil (**V**) zur Zirkulationsregelung für einen Warmwasserkreislauf mit:
a) einem Ventilkörper (**1**), der aufweist:
aa) einen ersten Stutzen (**11**) zum Anschluss eines ersten wasserführenden Rohrs (**R1**) und einen zweiten Stutzen (**12**) zum Anschluss eines zweiten wasserführenden Rohrs (**R2**);
ab) einen Ventilstutzen (**14**) zur Aufnahme eines Einsatzes (**5**), in dem eine Stösseleinheit (**6**) axial beweglich geführt ist; und
ac) einen Strömungsdurchgang als Ventilsitz am inneren Übergang zwischen den beiden Stutzen (**11**,**12**), auf den eine zur Stösseleinheit (**6**) gehörende Hauptdichtung (**64**) querschnittsverändernd wirkt;
b) einem Stellglied (**3**), das eine Antriebseinheit (**34**) zum Verstellen der Stösseleinheit (**6**) besitzt, wobei
c) die Stösseleinheit (**6**) mit einem Sensor (**9**) versehen ist, der ein Fühlerelement (**93**) zur Erfassung der auf das Fühlerelement (**93**) einwirkenden Temperatur hat; und
d) der vom Fühlerelement (**93**) erfasste Temperatur-Istwert bei Abweichung von einen Temperatur-Sollwert zur Umschaltung der Antriebseinheit (**34**) nutzbar ist dadurch gekenntzeichnet, dass
e) die Kappenartige Hauptdichtung (**64**) einen inneren Hohlraum (**640**) und eine Kegelspitze (**643**) zum Verschliessen des Strömungsdurchgangs am Ventilsitz hat;
f) der das Fühlerelement (**93**) aufnehmende Bereich des Sensors (**9**) steckt im Hohlraum (**640**) der Hauptdichtung (**64**); und
g) die Mittel (**63,632;64,642;8,80,81**) zur Umspülung in der Hauptdichtung (**64**) ausserhalb der Kegelspitze (**643**) angeordnete Durchbrüche (**642**) umfassen.

2. Regelventil (V) nach Anspruch 1, **dadurch gekennzeichnet, dass**
a) das Fühlerelement (**93**) im Spitzenbereich der Stösseleinheit (**6**), nahe der Hauptdichtung (**64**), angeordnet ist; und
b) die Mittel (**63,632;64,642;8,80,81**) zur Umspülung Strömungsspalte (**81**) umfassen, welche auch bei an sich von der Hauptdichtung (**64**) völlig verschlossenem Ventilsitz einen minimalen Wasserdurchfluss zulassen.

3. Regelventil (**V**) nach zumindest einem der Ansprüche 1 oder 2, **dadurch gekennzeichnet, dass**
a) zur Wärmedämmung eine das Regelventil ummantelnde Isolation (**19**) vorgesehen ist;
b) die Antriebseinheit (**34**) auf thermischer Stoffausdehnung basiert, ein Heizelement (**35**) hat und zur beschleunigten Abkühlung bei deaktiviertem Heizelement (**35**) ausserhalb der Isolation (**19**) angeordnet ist;
c) die Aktivierung des Heizelements (**35**) im Ergebnis eines Vergleichs zwischen dem vom Fühlerelement (**93**) erfassten Temperatur-Istwert und einem einstellbaren Temperatur-Sollwert erfolgt.

4. Regelventil (**V**) nach zumindest einem der Ansprüche 2 bis 3, **dadurch gekennzeichnet, dass**
a) der Strömungsdurchgang am Ventilsitz von einem Durchgang (**80**) durch eine Sitzscheibe (**8**) gebildet ist;
b) die Sitzscheibe (**8**) mit ihrer Unterseite (**83**) auf einer am Übergang zwischen den beiden Stutzen (**11**,**12**) vorhandenen Ringschulter (**15**) aufliegt; und
c) die Strömungsspalte (**81**) sich vom Durchgang (**80**), auf der Oberseite (**82**) der Sitzscheibe (**8**) erstreckende Keilkonturen sind.

5. Regelventil (**V**) nach zumindest einem der Ansprüche 1 bis 4, **dadurch gekennzeichnet, dass**
a) die Stösseleinheit (**6**) eine Feder (**65**) und eine Hülsenkombination (**62,63**) umfasst, in welcher der Sensor (**9**) steckt;
b) die Feder (**65**) sich einerseits am Ventilkörper (**1**) und anderseits an der Stösseleinheit (**6**) abstützt und eine Kraft generiert, um die Hauptdichtung (**64**) vom Ventilsitz zu entfernen und somit das Regelventil in die Offenstellung zu bewegen.

6. Regelventil (**V**) nach Anspruch 5, **dadurch gekennzeichnet, dass**
a) die Hülsenkombination (**62,63**) patronenförmig ist und ein Hülsenoberteil (**62**) sowie ein damit zusammensetzbares Hülsenunterteil (**63**) umfasst;
b) das Hülsenoberteil (**62**) aufweist:
ba) eine Kopfzone (**629**) und eine Fusszone (**624**), durch die sich ein axialer Durchgang (**620**) erstreckt;
bb) ein erstes Innengewinde (**628**) an der Mündung des Durchgangs (**620**) an der Kopfzone (**629**), das zur Aufnahme einer zur Stösseleinheit (**6**) gehörenden Justierschraube (**61**) dient;
bc) einen in der Kopfzone (**629**) gelegenen seitlichen Auslass (**627**), der zum Durchtritt einer vom Sensor (**9**) abgehenden Messleitung (**92**) bestimmt ist; und
bd) ein Verbindungsmittel (**626**), vorzugsweise in Gestalt eines zweiten Innengewindes (**626**), an der Fusszone (**624**) zum Zusammensetzen mit dem Hülsenunterteil (**63**); und
c) das Hülsenunterteil (**63**) aufweist:
ca) einen axialen Durchgang (**630**);
cb) ein Verbindungsmittel (**636**), vorzugsweise in Gestalt eines Aussengewindes (636), zum Zusammensetzen mit dem Hülsenoberteil (**62**);
cc) einen Hülsenflansch (**634**), der das übrige Hülsenunterteil (**63**) im Aussenmass überragt; und
cd) einen Kragen (**633**), der im Aussenmass gegenüber dem Hülsenflansch (**634**) verkleinert ist; wobei
d) der Kragen (**633**) in den Hohlraum (**640**) der Hauptdichtung (**64**) ragt und dabei ein Flansch (**644**) der Hauptdichtung (**64**) am Flansch (**634**) des Hülsenunterteils (**63**) ansteht.

7. Regelventil (**V**) nach zumindest einem der Ansprüche 5 bis 6, **dadurch gekennzeichnet, dass**
a) die Feder (**65**) die Hauptdichtung (**64**) umgibt und sich dabei unter deren Flansch (**644**) abstützt;
b) die Mittel (**63**,**632**;**64**,**642**;**8**,**80**,**81**) zur Umspülung des das Fühlerelement (**93**) aufnehmenden Bereichs des Sensors (**9**) mit Wasser, am Hülsenunterteil (**63**), über dessen Flansch (**634**) angeordnete Durchbrüche (**632**) umfassen; und
c) zwischen die Hülsenkombination (**62**,**63**), nach aussen zum Einsatz (**5**) und nach innen zum Sensor (**9**) Dichtungen (**72;74,7**5) eingefügt sind.

8. Regelventil (**V**) nach Anspruch 7, **dadurch gekennzeichnet, dass**
a) der Einsatz (**5**) eine ausserhalb des Ventilstutzens (**14**) liegende Öffnung (**57**) zum Durchtritt der vom Sensor (**9**) kommenden Messleitung (**92**) hat; und
b) ein Adapter (**4**) zum lösbaren Verbinden des Stellglieds (**3**) mit dem Einsatz (**5**) vorhanden ist.

9. Anordnung zur Zirkulationsregelung für einen Warmwasserkreislauf, die Anordnung enthält ein Regelventil (**V**) nach zumindest einem der Ansprüche 1 bis 8, **dadurch gekennzeichnet, dass**
a) sich vom Sensor (**9**) eine Messleitung (**92**) oder eine Funkverbindung zur Übermittlung des vom Fühlerelement (**93**) erfassten Temperatur-Istwerts an einen Regler (**2**) erstreckt;
b) der Regler (**2**) ein Modul mit einem eingespeicherten Temperatur-Sollwert besitzt; und
c) sich vom Regler (**2**) eine Stellleitung (**36**) oder eine Funkverbindung zur Übermittlung einer Signalisation an das Stellglied (**3**) erstreckt, wobei die Signalisation im Regler (**2**) durch Vergleich zwischen Temperatur-Istwert und Temperatur-Sollwert entsteht.

10. Anordnung zur Zirkulationsregelung nach Anspruch 9, **dadurch gekennzeichnet, dass** die Aktivierung des Stellglieds (**3**) in einer Stromzufuhr an dessen Heizelement (**35**) zur Generierung der thermischen Stoffausdehnung in der Antriebseinheit (**34**) besteht.

11. Anordnung zur Zirkulationsregelung nach zumindest einem der Ansprüche 9 und 10, **dadurch gekennzeichnet, dass**
a) der Regler (**2**) mit einem daran vorhandenen Befehlsorgan (**21**) ausgestattet und/oder mit einem externen Geber verbunden ist, über welche sich ein oder mehrere Temperatur-Sollwerte und zugehörige Betriebszeiten im Regler (**2**) einspeichern lassen;
b) der Regler (**2**) mit einem daran vorhandenen Display (**22**) ausgestattet und/oder mit einer externen Anzeige verbunden ist, woran z.B. der Temperatur-Istwert, der eingestellte Temperatur-Sollwert, der gewählte Betriebsmodus der Zirkulationsregelung, der Zustand des Regelventils (**V**) und Störungsmeldungen ablesbar sind.

## Claims

1. Control valve (V) for the circulation control for a warm water circulation with:
a) a valve body (1) which has:
aa) a first short pipe connector (11) for connecting a first water-conveying pipe (R1) and a second short pipe connector (12) for connecting a second water-conveying pipe (R2);
ab) a valve connector (14) for receiving an insert (5) in which a tappet unit (6) is guided axially movable; and
ac) a flow passage as valve seat at the inner transition between the two connectors (11, 12) on which a main seal (64) belonging to the tappet unit (6) acts to change the cross-sectional area;
b) an actuator (3) which has a drive unit (34) for displacing the tappet unit (6), wherein
c) the tappet unit (6) is provided with a sensor (9) which has a sensor element (93) for determining the temperature acting on the sensor element (93); and
d) the actual temperature value determined by the sensor element (93) when deviating from an ideal temperature value can be used to switch over the drive unit (34),
is **characterised in that**
e) the cap-like main seal (64) has an internal hollow cavity (640) and a cone tip (643) for closing the flow passage at the valve seat;
f) the region of the sensor (9) holding the sensor element (93) fits in the hollow cavity (640) of the main seal (64); and
g) the means (63, 632; 64, 642; 8, 80, 81) for flushing comprise apertures (642) arranged in the main seal (64) outside of the cone tip (643).

2. Control valve (V) according to claim 1 **characterised in that**
a) the sensor element (93) is disposed in the tip area of the tappet unit (6), close to the main seal (64); and
b) the means (63, 632; 64, 642; 8, 80, 81) for flushing round comprise flow gaps (81) which permit a minimal water through-flow even when the valve seat is in itself fully closed by the main seal (64).

3. Control valve (V) according to at least one of claims 1 or 2 **characterised in that**
a) an insulation (10) surrounding the control valve is provided for heat insulation;
b) the drive unit (34) is based on thermal material expansion, has a heating element (35) and, for accelerated cooling down when the heating element (35) is deactivated, is disposed outside of the insulation (19);
c) the activation of the heating element (35) takes place as a result of a comparison between the actual temperature value determined by the sensor element (93) and an ideal temperature value which is adjustable.

4. Control valve (V) according to at least one of claims 2 to 3 **characterised in that**
a) the flow passage at the valve seat is formed by a passage (80) through a seat disc (8);
b) the seat disc (8) rests with its underneath side (83) on a ring shoulder (15) which is provided at the transition between the two short connectors (11, 12); and
c) the flow gaps (81) are wedge contours extending from the passage (80) on the upper side (82) of the seat disc (8).

5. Control valve (V) according to at least one of claims 1 to 4 **characterised in that**
a) the tappet unit (6) comprises a spring (65) and a sleeve combination (62, 63) in which the sensor (9) is fitted;
b) the spring (65) is supported on one side on the valve body (1) and on the other side on the tappet unit (6) and generates a force in order to remove the main seal (64) from the valve seat and thus to move the control valve into the open position.

6. Control valve (V) according to claim 5 **characterised in that**
a) the sleeve combination (62, 63) is cartridge-like and comprises a sleeve upper part (62) as well as a sleeve lower part (63) which can be fitted together therewith;
b) the sleeve upper part (62) has:
ba) a head zone (629) and a foot zone (624) through which an axial passage (620) extends;
bb) a first internal thread (628) at the mouth of the passage (620) at the head zone (629) which serves for receiving an adjusting screw (61) belonging to the tappet unit (6);
bc) a lateral outlet (627) situated in the head zone (629) and intended for passing through a measuring lead (92) which comes from the sensor (9); and
bd) a connecting means (626), preferably in the form of a second internal thread (626), at the foot zone (624) for fitting together with the sleeve lower part (63); and
c) the sleeve lower part (63) has:
ca) an axial passage (630);
cb) a connecting means (636), preferably in the form of an external thread (636), for fitting together with the sleeve upper part (62);
cc) a sleeve flange (634) which protrudes beyond the remaining sleeve lower part (63) externally; and
cd) a collar (634) which is reduced in its external dimension relative to the sleeve flange (634); wherein
d) the collar (633) projects into the hollow cavity (640) of the main seal (64) and a flange (644) of the main seal (64) thereby adjoins the flange (634) of the sleeve lower part (63).

7. Control valve (V) according to at least one of claims 5 to 6 **characterised in that**
a) the spring (65) surrounds the main seal (64) and is thereby supported underneath the flange (644) thereof;
b) the means (63, 632; 64, 642; 8, 80, 81) for flushing water round the area of the sensor (9) holding the sensor element (93) comprise apertures (632) disposed on the sleeve lower part (63) above the flange (634) thereof; and
c) seals (72; 74, 75) are inserted between the sleeve combination (62, 63) outside of the insert (5) and inwards towards the sensor (9).

8. Control valve (V) according to claim 7 **characterised in that**
a) the insert (5) has an opening (57) outside of the valve connector (14) for passage of the measuring lead (92) coming from the sensor (9); and
b) an adapter (4) is provided for detachably connecting the actuator (3) to the insert (5).

9. Arrangement for the circulation control for a warm water circulation, the arrangement contains a control valve (V) according to at least one of claims 1 to 8 **characterised in that**
a) a measuring lead (92) or a radio link extends from the sensor (9) for transmitting the actual temperature value determined by the sensor element (93) to a control unit (2);
b) the control unit (2) has a module with a stored ideal temperature value; and
c) an actuating lead (36) or radio link extends from the control unit (2) for transmitting a signal to the actuator (3) wherein the signal is produced in the control unit (2) through a comparison between the actual temperature and the ideal temperature.

10. Arrangement for the circulation control according to claim 9 **characterised in that** the activation of the actuator (3) consists in a current supply at its heating element (35) for generating the thermal material expansion in the drive unit (34).

11. Arrangement for the circulation control according to at least one of claims 9 and 10 **characterised in that**
a) the control unit (2) is fitted with a command member (21) provided thereon and/or is connected to an external transmitter through which one or more ideal temperature values and associated operating times can be stored in the control unit (2);
b) the control unit (2) is fitted with a display (22) provided thereon and/or is connected to an external display at which for example the actual temperature value, the set ideal temperature value, the selected operating mode of the circulation control, the state of the control valve (V) and breakdown notices can be retrieved.

## Revendications

1. Vanne de régulation (V) pour réguler la circulation dans un circuit d'eau chaude, comprenant :
a) un corps de vanne (1) qui présente :
aa) un premier manchon (11) pour raccorder un premier tube (R1) dans lequel circule de l'eau et un deuxième manchon (12) pour raccorder un deuxième tube (R2) dans lequel circule de l'eau ;
ab) un manchon à vanne (14) pour accueillir un insert (5) dans lequel une unité à poussoir (6) est guidée en mobilité dans le sens axial ; et
ac) un passage d'écoulement faisant office de siège de vanne au niveau de la transition intérieure entre les deux manchons (11, 12), sur lequel une garniture d'étanchéité principale (64) faisant partie de l'unité à poussoir (6) agit en modifiant la section transversale ;
b) un actionneur (3) qui possède une unité d'entraînement (34) pour le dépositionnement de l'unité à poussoir (6),
c) l'unité à poussoir (6) étant munie d'un capteur (9) qui possède un élément sonde (93) pour capter la température qui agit sur l'élément sonde (93) ; et
d) la valeur réelle de la température captée par l'élément sonde (93) pouvant être utilisée pour la permutation de l'unité d'entraînement (34) en cas de différence par rapport à une température de consigne, **caractérisée en ce que**
e) la garniture d'étanchéité principale (64) de type chapeau possède un espace creux intérieur (640) et une pointe conique (643) pour fermer le passage d'écoulement sur le siège de vanne ;
f) la zone du capteur (9) qui accueille l'élément sonde (93) est insérée dans l'espace creux (640) de la garniture d'étanchéité principale (64) ; et
g) les moyens (63, 632 ; 64, 642 ; 8, 80, 81) de rinçage comprennent dans la garniture d'étanchéité principale (64) des traversées (642) disposées en-dehors de la pointe conique (643).

2. Vanne de régulation (V) selon la revendication 1, **caractérisée en ce que**
a) l'élément sonde (93) est disposé dans la zone de la pointe de l'unité à poussoir (6), à proximité de la garniture d'étanchéité principale (64) ; et
b) les moyens (63, 632 ; 64, 642 ; 8, 80, 81) de rinçage comprennent des interstices d'écoulement (81) qui permettent un passage d'eau minimal même lorsque le siège de vanne est complètement fermé par la garniture d'étanchéité principale (64).

3. Vanne de régulation (V) selon au moins l'une des revendications 1 ou 2, caractérisée en ce
a) qu'une isolation (19) enveloppant la vanne de régulation est prévue pour l'isolation thermique ;
b) que l'unité d'entraînement (34) se base sur la dilatation thermique du matériau, possède un élément chauffant (35) et est disposée en-dehors de l'isolation (19) pour accélérer le refroidissement lorsque l'élément chauffant (35) est désactivé ;
c) que l'activation de l'élément chauffant (35) a lieu en résultat d'une comparaison entre la valeur réelle de la température captée par l'élément sonde (93) et une température de consigne réglable.

4. Vanne de régulation (V) selon au moins l'une des revendications 2 à 3, **caractérisée en ce que**
a) le passage d'écoulement sur le siège de vanne est formé par un passage (80) à travers un disque de siège (8) ;
b) le disque de siège (8) repose avec son côté inférieur (83) sur un épaulement annulaire (15) présent au niveau de la transition entre les deux manchons (11, 12) ; et
c) les interstices d'écoulement (81) sont des profilés coniques qui s'étendent depuis le passage (80) sur le côté supérieur (82) du disque de siège (8).

5. Vanne de régulation (V) selon au moins l'une des revendications 1 à 4, **caractérisée en ce que**
a) l'unité à poussoir (6) comprend un ressort (65) et une combinaison de douilles (62, 63) dans laquelle est inséré le capteur (9) ;
b) le ressort (65) s'appuie d'un côté sur le corps de vanne (1) et de l'autre côté sur l'unité à poussoir (6) et génère une force pour éloigner la garniture d'étanchéité principale (64) du siège de vanne et déplacer ainsi la vanne de régulation en position ouverte.

6. Vanne de régulation (V) selon la revendication 5, **caractérisée en ce que**
a) la combinaison de douilles (62, 63) est en forme de cartouche et comprend une partie supérieure de douille (62) ainsi qu'une partie inférieure de douille (63) qui peut être assemblée avec celle-ci ;
b) la partie supérieure de douille (62) présente :
ba) une zone de tête (629) et une zone de pied (624) à travers lesquelles s'étend un passage (620) axial ;
bb) un premier filet intérieur (628) sur la bouche du passage (620) au niveau de la zone de tête (629),
lequel sert à accueillir une vis de réglage (61) qui fait partie de l'unité à poussoir (6) ;
bc) une sortie (627) latérale se trouvant dans la zone de tête (629), laquelle est conçue pour le passage d'un câble de mesure (92) qui part du capteur (9) ; et
bd) un moyen de liaison (626), de préférence sous la forme d'un deuxième filet intérieur (626), au niveau de la zone de pied (624) pour l'assemblage avec la partie inférieure de douille (63) ; et
c) la partie inférieure de douille (63) présente :
ca) un passage axial (630) ;
cb) un moyen de liaison (636), de préférence sous la forme d'un filet extérieur (636), pour l'assemblage avec la partie supérieure de douille (62) ;
cc) une bride de douille (634) qui, avec ses dimensions hors tout, fait saillie du reste de la partie inférieure de douille (63) ; et
cd) un collet (633) qui, avec ses dimensions hors tout, est réduit par rapport à la bride de douille (634) ;
d) le collet (633) faisant saillie dans l'espace creux (640) de la garniture d'étanchéité principale (64) et une bride (644) de la garniture d'étanchéité principale (64) repose ainsi contre la bride (634) de la partie inférieure de douille (63).

7. Vanne de régulation (V) selon au moins l'une des revendications 5 à 6, **caractérisée en ce que**
a) le ressort (65) entoure la garniture d'étanchéité principale (64) et s'appuie ainsi en des sous de sa bride (644) ;
b) les moyens (63, 632 ; 64, 642 ; 8, 80, 81) de rinçage avec de l'eau de la zone du capteur (9) qui accueille l'élément sonde (93) comprennent, au niveau de la partie inférieure de douille (63), des traversées (632) disposées au-dessus de sa bride (634) ; et
c) des garnitures d'étanchéité (72 ; 74, 75) sont disposées entre la combinaison de douilles (62, 63) et l'insert (5) vers l'extérieur, et le capteur (9) vers l'intérieur.

8. Vanne de régulation (V) selon la revendication 7, **caractérisée en ce**
a) **que** l'insert (5) possède une ouverture (57) qui se trouve à l'extérieur du manchon à vanne (14) pour le passage du câble de mesure (92) qui provient du capteur (9) ; et
b) **qu'**il existe un adaptateur (4) pour une liaison amovible de l'actionneur (3) avec l'insert (5).

9. Arrangement de régulation de la circulation pour un circuit d'eau chaude, l'arrangement comprenant une vanne de régulation (V) selon au moins l'une des revendications 1 à 8, **caractérisé en ce**
a) **qu'**un câble de mesure (92) ou une liaison radioélectrique s'étend depuis le capteur (9) pour communiquer à un régulateur (2) la valeur réelle de la température captée par l'élément sonde (93) ;
b) **que** le régulateur (2) possède un module dans lequel est enregistrée une température de consigne ; et
c) **qu'**un câble de commande (36) ou une liaison radioélectrique s'étend depuis le régulateur (2) pour communiquer une signalisation à l'actionneur (3), la signalisation étant produite dans le régulateur (2) par une comparaison entre la valeur réelle de la température et la température de consigne.

10. Arrangement de régulation de la circulation selon la revendication 9, **caractérisé en ce que** l'activation de l'actionneur (3) se compose d'une arrivée de courant à son élément chauffant (35) en vue de générer la dilatation thermique du matériau dans l'unité d'entraînement (34).

11. Arrangement de régulation de la circulation selon au moins l'une des revendications 9 et 10, **caractérisé en ce que**
a) le régulateur (2) est équipé d'un organe de commande (21) présent sur celui-ci et/ou est relié avec un codeur externe par le biais duquel il est possible d'enregistrer dans le régulateur (2) une ou plusieurs températures de consigne et les temps de fonctionnement associés ;
b) le régulateur (2) est équipé d'un afficheur (22) présent sur celui-ci et/ou est relié avec un indicateur externe sur lequel peuvent être lus, par exemple, la valeur réelle de la température, la température de consigne réglée, le mode de fonctionnement sélectionné de la régulation de la circulation, l'état de la vanne de régulation (V) et des messages d'erreur.
